# EUROPÄISCHE PATENTSCHRIFT

(11) **EP 4 101 687 B1**
(45) Veröffentlichungstag und Bekanntmachung des Hinweises auf die Patenterteilung: **31.07.2024**
(21) Anmeldenummer: 22177555.4
(22) Anmeldetag: 07.06.2022
(51) Int. Cl.: B60N 2/015, B60N 2/30, B60N 2/36, B60N 2/68

(54) **BEFESTIGUNGSVORRICHTUNG FÜR EINE RÜCKENLEHNE EINES FAHRZEUGSITZES MIT WENIGSTENS ZWEI UNABHÄNGIG VONEINANDER VERSCHWENKBAREN LEHNENELEMENTEN, SOWIE VERFAHREN ZUR MONTAGE EINES LEHNENELEMENTS MITTELS EINER BEFESTIGUNGSVORRICHTUNG**
FASTENING DEVICE FOR A BACKREST OF A VEHICLE SEAT WITH AT LEAST TWO INDEPENDENTLY PIVOTABLE BACKREST ELEMENTS AND METHOD FOR MOUNTING A BACKREST ELEMENT BY MEANS OF A FASTENING DEVICE
DISPOSITIF DE FIXATION POUR UN DOSSIER D'UN SIÈGE DE VÉHICULE POURVU D'AU MOINS DEUX ÉLÉMENTS DOSSIERS PIVOTANTS INDÉPENDAMMENT, AINSI QUE PROCÉDÉ DE MONTAGE D'UN ÉLÉMENT DOSSIER AU MOYEN D'UN DISPOSITIF DE FIXATION

(30) Priorität: 08.06.2021 DE 102021205770
(43) Veröffentlichungstag der Anmeldung: 14.12.2022
(60) Teilanmeldung: 23177673.3
(73) Patentinhaber: Magna Seating (Germany) GmbH, 63877 Sailauf (DE)
(72) Erfinder: WACHTEL, Andreas, 97816 Lohr (DE); STAAB, André, 63825 Sommerkahl (DE); WILSBERG, Markus, 63906 Erlenbach (DE)
(74) Vertreter: Reuter, Silke Beatrix

(56) Entgegenhaltungen:
- DE-A1- 102008 036 286
- DE-A1- 102019 009 183
- DE-B3- 102014 103 801
- FR-A1- 2 663 889
- US-A1- 2018 043 799

## Beschreibung

Die Erfindung betrifft eine Befestigungsvorrichtung für eine Rückenlehne eines Fahrzeugsitzes mit wenigstens zwei unabhängig voneinander verschwenkbaren Lehnenelementen, sowie ein Verfahren zur Montage einer Anzahl Lehnenelemente mittels einer Befestigungsvorrichtung.

### Stand der Technik

Es ist bekannt, eine Sitzanordnung eines Kraftfahrzeugs der zweiten Sitzreihe, mit einer geteilten Rückenlehne mit unabhängig voneinander schwenkbaren Lehnenelementen auszustatten. Hierdurch ist es möglich die Lehnenelemente ausgehend von einer Gebrauchsposition des Sitzteils zur Schaffung einer Ladefläche auf das Sitzteil in eine Ladeposition zu verschwenken.

Die Sitzanordnung der zweiten oder weiteren Sitzreihe umfasst dabei beispielsweise zwei symmetrische Sitzteile mit einer Sitzfläche und einer Rückenlehne mit Lehnenelementen in einer sogenannten 50:50 Teilung oder eine asymmetrische Teilung im Verhältnis 40:20:40.

Sowohl bei der Varianten der symmetrischen als auch der asymmetrischen Teilung sind die Lehnenelemente unabhängig voneinander ausgehend von der Gebrauchsposition in die Ladestellung verschwenkbar.

In der Gebrauchsposition ist die Rückenlehne beidseits in Querrichtung des Kraftfahrzeugs gesehen an einem oberen Endbereich an der Karosserie über eine Lehnenverrastung/Schlossanbindung gehalten.

Die Lehnenelemente der Rückenlehne sind nach dem Entriegeln dieser Schlossanbindung um eine am unteren Endbereich der Lehnenelemente verlaufende Schwenkachse verschwenkbar relativ zur Fahrzeugkarosserie nach vorne in Richtung auf das Sitzteil klappbar. Hierfür sind die Lehnenelemente der Rückenlehne über Lagerachsen an karosserieseitig ausgeführten Gegenlagerstellen gelagert und dort crashsicher gehalten. Bei einer zweigeteilten Rückenlehne sind dementsprechend mindestens drei karosserieseitige Gegenlagestellen vorzusehen.

Bei den bekannten Sitzanordnungen werden die Lagerachsen der Lehnenelemente der Rückenlehne über Steck- sowie Clipsverbindungen in Kombination mit Schraubverbindungen zur Sicherung und Ausrichtung an den karosserieseitigen Gegenlagerstellen montiert. Eine derartige Montage ist zeitaufwändig und erfordert eine hohe Bauteilkomplexität.

Die DE 10 2019 009 183 A1 offenbart eine Sitzanordnung mit einer Rückenlehne die einen Drehzapfen aufweist, der drehbar um eine Achse in einer Montagehalterung gelagert ist. Die Montagehalterung hat eine Basis, die zur Montage an einem Fahrzeug geeignet ist und umfasst ein Loch, das eine Buchse aufnehmen kann. In der Buchse kann der Drehzapfen gelagert werden. Die Öffnung der Buchse hat eine elliptische Form. An einem Ende des Drehzapfens befinden sich ein Schaft und ein vergrößerter Kopf, der sich weiter von der Achse weg erstreckt als der Schaft.

Die DE 10 2014 103 801 B3 beschreibt eine Rückenlehne die zwei schwenkbare Rückenlehnenteile aufweist, die jeweils mit einem äußeren Lagerbolzen und einem inneren Lagerbolzen versehen sind. Der innere Lagerbolzen ist in einem karosserieseitigen Lager gelagert und der äußere Lagerbolzen greift in eine Lagerausnehmung der Karosseriewandung ein. Bei der Montage wird der Schraubenkopf des äußeren Lagerbolzens in den oberhalb der Ausnehmung angeordneten Schlitzbereich eingesetzt. Die zylindrischen Abschnitte des äußeren Lagerbolzens sind mit Durchmessern versehen, die mit den entsprechenden Durchmessern der Lageraussparung bzw. des zentralen Schlitzes übereinstimmen.

Aus der DE 10 2008 036 286 B4 ist eine Vorrichtung für eine schwenkbare Lagerung von nebeneinander angeordneten Rückenlehnen bekannt. Die Vorrichtung besteht aus einer hinteren Rückenlehne, die eine Drehachse aufweist, die in zueinander justierten Lagerschalen gehalten wird. Jede Lagerschale weist an den freien Enden Stützköpfe auf. Die Stützköpfe sind in einem Lagerbock durch eine Lagerstütze in einer Montageendstellung festgehalten.

Die US 2018/043799 A1 offenbart ein schwenkbares Sitzlehnenteil zur Verwendung in Kraftfahrzeugen, mit einer Bodenbefestigung mit Wand, die mit einem schlüssellochförmigen Schlitz ausgeführt ist, und mit einem Sitzträgerteil, das einen Bolzen, eine Buchse und eine Feder aufweist.

Das Dokument FR 2 663 889 A1 beschreibt eine Schwenkvorrichtung für eine abnehmbare Rückenlehne für einen Fahrzeugrücksitz. Die abnehmbare rechte Rückenlehne hat zwei Zapfen mit abgeflachten Teilen, die in Schlitze von karosseriefesten Halterungen passen. Die Rückenlehne wird flach in die Halterungen hineingeschoben, und die Achsen werden in die Schlitze der Halterungen eingesteckt. Geschlitzte Buchsen sind in die Halterungen eingepasst und haben Drehringe mit ähnlichen Schlitzen wie die Buchsen, so dass die Rückenlehne in den Halterungen verriegelt ist, bis sie wieder demontiert werden soll.

Es ist eine Aufgabe der Erfindung eine Befestigungsvorrichtung für eine Rückenlehne einer Sitzanordnung eines Kraftfahrzeugs mit wenigstens zwei unabhängig voneinander verschwenkbaren Lehnenelementen bereitzustellen, die eine einfache und werkzeuglose Montage im Kraftfahrzeug erlaubt, wobei die Befestigungsvorrichtung eine schwenkbare Anbindung der Lehnenelemente an die Karosserie und die Anforderungen an die Crashsicherheit erfüllt.

Diese Aufgabe wird durch die im Patentanspruch 1 angegebenen Merkmale gelöst.

Die Befestigungsanordnung gemäß Anspruch 1 ermöglicht eine werkzeuglose, schnelle Montage und Lagerung der Lehnenelemente der Rückenlehne der Sitzanordnung einer zweiten Sitzreihe eines Kraftfahrzeugs.

Des Weiteren ist es eine Aufgabe der Erfindung ein Verfahren zur Montage eines Lehnenelements mittels einer Befestigungsvorrichtung für eine Rückenlehne einer Sitzanordnung eines Kraftfahrzeugs bereitzustellen, wobei das Verfahren eine einfache und werkzeuglose Montage im Kraftfahrzeug ermöglichen soll.

Durch das erfindungsgemäße Verfahren gemäß Anspruch 6 ist es möglich die Sitzanordnung mittels einer reinen Stecklösung zwischen den Lehnenelementen, den zugeordneten Lagerachsen und den karosserieseitig angeordneten Gegenlagerstellen herzustellen. Die Erfindung realisiert eine crashsichere Montage ohne zusätzliche Schraubprozesse. Dadurch wird die Montagezeit reduziert. Zudem sind keine zusätzlichen Befestigungselemente mehr notwendig. Das Ausrichten der Lehnenelemente und die Sicherung in einer Endmontage-Position, in der die Lehnenelemente über eine quer verlaufende Schwenkachse in Fahrtrichtung gesehen nach vorne geschwenkt werden können, erfolgt automatisch während der Montage, was zusätzlich die Montagezeit verringert.

Gemäß eines erfindungsgemäßen Aspekts wird durch das montieren des Lehnenelements zunächst in der Vormontage-Position bei der die Lagerachsen der äußeren und mittleren Lagerstelle mittels rechteckig ausgeführten Vormontage-Lagerabschnitten in korrespondierenden Schlitzbereichen abgestützt und vorjustiert gehalten sind und dem nachfolgenden zweiten Montageschritt, bei dem bei einem Verschwenken des Lehnenelements ein automatisches, zwangsgeführtes Verschieben der Lagerachsen die Endmontage-Position in der die Lagerachsen über zylindrische Lagerabschnitte in korrespondierenden Lagerausnehmungen gehalten sind, wird eine werkzeuglose, schnelle und einfache Montage erreicht. Ein Verkanten der Lehnenelemente bei dem Verdrehen in die Endmontage-Position wird vermieden. In der Endmontage-Position wird eine verminderte Flächenpressung im Bereich der Lagerstellen erreicht.

Eine derartige Sitzanordnung ist üblicherweise in Fahrtrichtung gesehen hinter dem Fahrer und Beifahrersitz als sogenannte zweite Sitzreihe verbaut und umfasst zu dem Fahrer und Beifahrersitz weitere zwei oder drei Sitzplätze.

Die x, y, z- Richtung entspricht den Richtungen eines üblichen Fahrzeugkoordinatensystems, bei dem x die Fahrzeuglängsrichtung, y die Querrichtung und z die Hochrichtung bezeichnet.

Axial bedeutet in Richtung einer Achse verlaufend ausgerichtet, radial verlaufend ist senkrecht dazu in Richtung des Radius ausgerichtet.

### Beschreibung der Erfindung

Die Erfindung wird nachfolgend beispielhaft unter Bezugnahme auf die beigefügten Zeichnungen beschrieben.

Es zeigen:
- Fig. 1: einen unteren Ausschnitt eines Lehnenelements einer Rückenlehne mit dem erfindungsgemäßen Befestigungssystem, das eine äußere und eine mittlere Lagerstelle umfasst,
- Fig. 2: eine perspektivische Darstellung eines Lehnenelements bei der Montage,
- Fig. 3: eine perspektivische Detailansicht des ersten Montageschrittes des Lehnenelements im Bereich der äußeren Lagerstelle,
- Fig. 4: eine perspektivische Detailansicht des ersten Montageschrittes des Lehnenelements im Bereich der mittleren Lagerstelle,
- Fig. 5: eine Draufsicht auf die äußere Lagerstelle nach dem ersten Montageschritt gemäß Fig. 3,
- Fig. 6: eine Draufsicht auf die mittlere Lagerstelle nach dem ersten Montageschritt gemäß Figur 4,
- Fig. 7: eine perspektivische Detailansicht des zweiten Montageschritts im Bereich der äußeren Lagestelle,
- Fig. 8: Darstellungen in einer Seitenansicht und einer perspektivischen Ansicht der äußeren Lagerstelle in der montierten Situation des Lehnenelements; und
- Fig. 9: Darstellungen in einer Seitenansicht und einer perspektivischen Ansicht der mittleren Lagerstelle in der montierten Situation des Lehnenelements.

Ein nicht dargestelltes Kraftfahrzeug umfasst üblicherweise sogenannte erste Sitzreihe mit einem Fahrersitz und einem Beifahrersitz, sowie eine zweite Sitzreihe mit einer Sitzanordnung für zwei oder drei weitere Sitzplätze. Hierfür weist die Sitzanordnung eine einteilige Sitzfläche auf. Die Rückenlehne der Sitzanordnung der zweiten Sitzreihe hingegen ist mit einer geteilten Rückenlehne mit unabhängig voneinander in Richtung auf die Sitzfläche bzw. gegenüber der Karosserie des Kraftfahrzeugs schwenkbaren Lehnenelementen 1 ausgeführt. Die Schwenkbewegung ist reversibel ausführbar. Hierdurch ist es möglich die Lehnenelemente 1 ausgehend von einer Gebrauchsposition des zugeordneten Sitzteils zur Schaffung einer Ladefläche auf das zugeordnete Sitzteil in Fahrtrichtung nach vorne um eine Schwenkachse 4 zu verschwenken. Die Lehnenelemente 1 weisen einen oberen Endbereich 3 und einen unteren Endbereich 2 auf.

Die Sitzanordnung der zweiten oder weiteren Sitzreihe umfasst dabei beispielsweise zwei symmetrische Sitzteile mit jeweils einer Sitzfläche und Rückenlehnen bildenden Lehnenelemente 1 in einer sogenannten 50:50 Teilung oder eine asymmetrische Teilung im Verhältnis 40/60 bzw. 40:20:40. Diese Aufteilung und Ausführung der Sitzanordnung mit Sitzflächen und Lehnenelementen 1 ist an dieser Stelle nur beispielhaft.

In der Gebrauchsposition ist die Rückenlehne beidseits in Querrichtung des Kraftfahrzeugs gesehen an dem oberen Endbereich 3 seitlich an der Karosserie über eine Lehnenverrastung/Schlossanbindung gehalten, so dass die Lehnenelemente 1 an einer Klappbewegung nach vorne gehindert werden. Die Lehnenelemente 1 sind in dieser Gebrauchsposition im Wesentlichen in der Hochrichtung ausgerichtet und dienen der Abstützung des Rückens des Benutzers auf den Sitzplätzen der Sitzanordnung in der zweiten Sitzreihe.

Die Lehnenelemente 1 der Rückenlehne sind nach dem Entriegeln dieser Schlossanbindung ausgehend von der Gebrauchsposition um die am unteren Endbereich 2 der Lehnenelemente 1 verlaufende Schwenkachse 4 relativ zur Fahrzeugkarosserie in Fahrtrichtung nach vorne in eine Ladeposition verschwenkbar.

Bei einer Sitzanordnung mit zweigeteilter Rückenlehne in einer 50:50 oder 40/60 Teilung mit zwei Lehnenelementen 1 sind dementsprechend pro Lehnenelement 1 eine äußere Lagerstelle 20 und eine mittlere Lagerstelle 40 randseitig am unteren Endbereich 2 zwischen dem Lehnenelement 1 und der Fahrzeugkarosserie ausgebildet. Die mittlere Lagerstelle 40 ist dabei beiden Lehnenelementen 1 zugeordnet und befindet sich mittig zwischen den beiden Lehenelementen 1 an ihren einander zugewandten mittleren seitlichen Randbereichen 2a. Die äußeren Lagerstellen 20 sind dementsprechend auf den einander abgewandten seitlichen äußeren Randbereichen 2b ausgebildet. Diese seitlichen äußeren Randbereiche 2b sind benachbart zu der Fahrzeugkarosserie im Seitenbereich des Kraftfahrzeugs angeordnet. Die Seitenbereiche der Fahrzeugkarosserie sind nicht dargestellt.

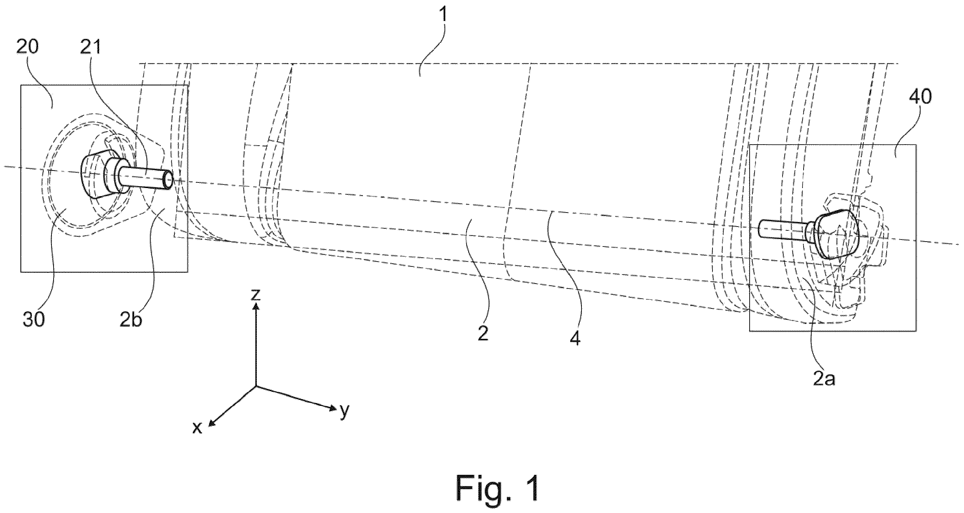

Die äußere Lagestelle 20 und die innere Lagerstelle 40 sind in der Figur 1 an einem Ausschnitt des unteren Endbereichs 2 eines Lehnenelements 1 gezeigt, wobei auf eine Darstellung der zugeordneten Fahrzeugkarosserie verzichtet wurde. Das dargestellte Lehnenelement 1 ist in der montierten Situation der Sitzanordnung hinter dem Beifahrersitz verbaut. Die mittlere Lagerstelle 40 ist in Querrichtung gesehen in einem mittleren Bereich des Fahrzeugbodens 6 der Fahrzeugkarosserie angeordnet.

Auf eine Beschreibung des grundsätzlichen Aufbaus der Lehnenelemente 1 wird verzichtet, da diese dem Fachmann bekannt ist. Die Lehnenelemente 1 umfassen grundsätzlich eine Lehnenstruktur mit einem Lehnenrahmen und einem den Lehnenrahmen umgebenden Lehnenpolster.

Der Aufbau der äußeren Lagestelle 20 sowie der mittleren Lagerstelle 40 wird nachfolgend anhand der Figuren näher erläutert.

Die äußere Lagerstelle 20 umfasst dabei eine an dem äußeren Randbereich 2b des Lehnenelements 1 bzw. des Lehnenrahmens festgelegte Lagerachse 21. Die Lagerachse 21 ist in Richtung ihrer Längserstreckung/Querrichtung in der montierten Situation verschwenkbar um die Schwenkachse 4 in einem karosseriefest angebundenen Gegenlagerelement 30 gehalten ist.

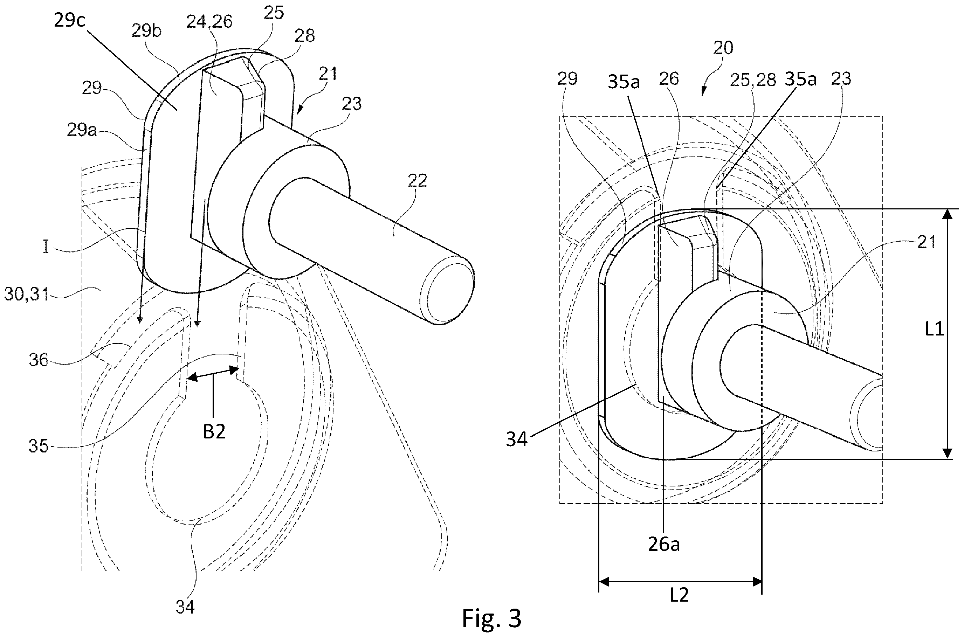

Figur 3 zeigt dabei auf der linken Seite die äußere Lagerstelle 20 in einer noch unmontierten Situation mit den Einzelteilen Lagerachse 21 und Gegenlagerelement 30, sowie auf der rechten Seite die Situation nach dem ersten Montageschritt in der Vormontage-Position. Der erste Montageschritt ist dabei durch die Pfeile I angezeigt, der ein Einstecken der Lagerachse 21 - wie weiter untenstehend noch näher erläutert ist - in das Gegenlagerelement 30 umfasst.

Die Lagerachse 21 umfasst unterschiedliche Abschnitte, denen verschiedene Funktionen zugeordnet sind. Ein erster zylindrischer Endabschnitt 22 weist einen Durchmesser D1 auf und dient zur Anbindung an den Lehnenrahmen. Angrenzend an diesen zylindrischen Endabschnitt 22 folgt der eigentliche zylindrische Lagerabschnitt 23 mit einem gegenüber dem ersten Durchmesser D1 größeren Durchmesser D2. Hieran in axialer Richtung benachbart weist die Lagerachse 21 einen Vormontage-Lagerabschnitt 24 auf. Dieser Der Vormontage-Lagerabschnitt 24 umfasst zwei Funktionen, die in einem Führungsabschnitt 26 und einem Ausrichtabschnitt 25 realisiert sind. Der Führungsabschnitt 26 ist mit parallel zueinander ausgerichteten ersten und zweiten Seitenflächen 27 und einer Breite B1 ausgeführt. Der Führungsabschnitt 26 weist einen ersten radialen Endabschnitt 26a auf. Gegenüberliegend zu dem ersten radialen Endabschnitt 26a ist der Vormontage-Lagerabschnitt 24 mit dem exzentrisch angeformten Ausrichtabschnitt 25 ausgeführt. Wie es aus der Figur 3 zu erkennen ist, ist dieser in radialer Richtung angrenzend an den Führungsabschnitt 26 angeformt. Der Ausrichtabschnitt 25 ist konisch ausgebildet und weist eine schräg verlaufende sich zum zylindrischen Lagerabschnitt 23 hin verjüngende Gleitfläche 28 sowie eine der Gleitfläche 28 gegenüberliegende Gegenlagerfläche 28a. Die Gegenlagerfläche 28a ist in Verlängerung der ersten der beiden Seitenflächen 27 ausgeführt.. Der Vormontage-Lagerabschnitt 24 wird endseitig von einem plattenförmigen Endabschnitt 29 begrenzt. Der plattenförmige Endabschnitt 29 weist eine im Wesentlichen rechteckige Grundfläche mit Seitenkanten 29a und abgerundeter Ober- und Unterkante 29b auf. Die Seitenkanten 29a sind hinsichtlich einer Länge L1 länger ausgeführt als die Ober- und Unterkante 29b mit einer Länge L2. Der plattenförmige Endabschnitt 29 weist eine ebene Anlagefläche 29c auf.

Das zugehörige Gegenlagerelement 30 ist mit der nicht dargestellten Fahrzeugkarosserie verbunden, z.B. verschraubt oder verschweißt. Das Gegenlagerelement 30 kann auch ein integraler Bestandteil der Fahrzeugkarosserie sein. Das Gegenlagerelement 30 bildet einen Gehäuseabschnitt zur Lagerung und Aufnahme der Lagerachse 21 und umfasst im Wesentlichen einen ringförmigen Gehäuseabschnitt 31 mit einer umlaufenden Oberflächenabschnitt 32 und einen an den ringförmigen Gehäuseabschnitt 31 angrenzenden senkrechten Wandabschnitt 33. Der senkrechte Wandabschnitt 33 bildet eine nach innen weisende Anlagefläche 33a.

Im senkrechten Wandabschnitt 33 ist eine zylindrische Lagerausnehmung 34 mit einem Durchmesser D2 eingebracht, der dem Durchmesser D2 des Lagerabschnitts 23 entspricht und zur Aufnahme und Lagerung der Lagerachse 21 in der montierten Situation (Endmontage-Position) dient.

Ausgehend von dieser Lagerausnehmung 34 erstreckt sich ein nach oben verlaufender rechteckiger erster Schlitzbereich 35 mit einer Breite B2. Der erste Schlitzbereich 35 weist gegenüberliegende Seitenflächen 35a auf. Die Breite B2 des Schlitzbereichs 35 ist derart bemessen, dass B2 kleiner ausgeführt ist als der Durchmesser D2. Des Weiteren ist der Schlitz derart bemessen, dass B2 hinsichtlich der Breite etwas größer ausgeführt ist als die Breite B1 des Führungsabschnitts 26. Der rechteckige erste Schlitzbereich 35 geht in einen zweiten Schlitzbereich 36 über, der in den umlaufenden Oberflächenabschnitt des ringförmigen Gehäuseabschnitts 31 eingebracht ist. Der zweite Schlitzbereich 36 weist eine Breite B3 auf. Die Breite B3 ist dabei größer ausgeführt als die Länge L2 der Ober- bzw. Unterkante 29b des Endabschnitts. Die Breite B3 ist weiterhin kleiner ausgeführt als die Länge L1 der Seitenkanten 29a des Endabschnitts 29.

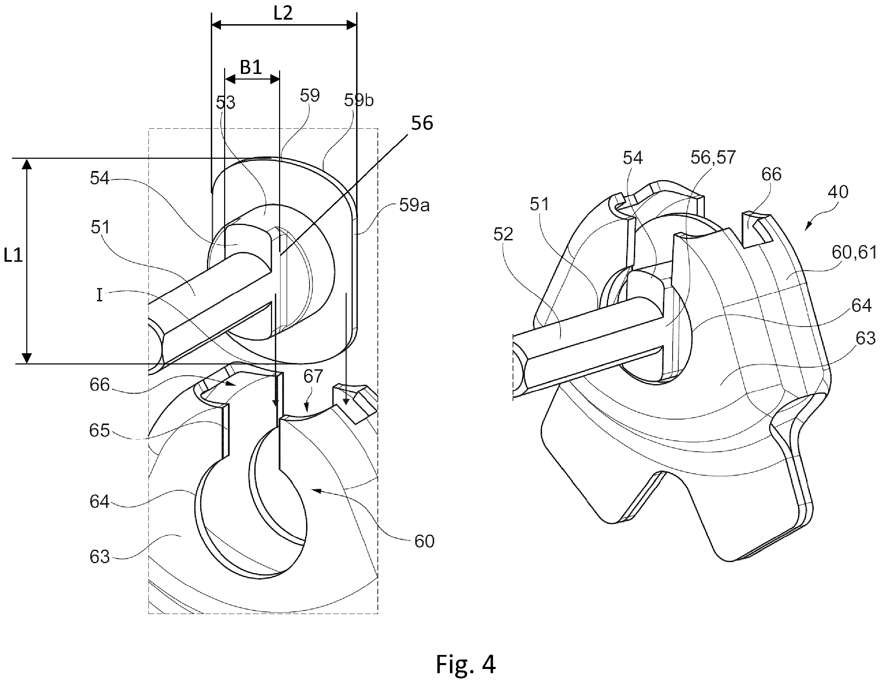

Figur 4 zeigt dabei auf der linken Seite die mittlere Lagerstelle 40 in einer noch unmontierten Situation mit den Einzelteilen Lagerachse 51 und Gegenlagerelement 60, sowie auf der rechten Seite die Situation nach dem ersten Montageschritt (Vormontage-Position).

Die Lagerachse 51 umfasst unterschiedliche Abschnitte, denen verschiedene Funktionen zugeordnet sind. Ein erster zylindrischer Endabschnitt 52 weist einen Durchmesser D1 auf und dient zur Anbindung an den Lehnenrahmen. Angrenzend an diesen zylindrischen Endabschnitt 52 folgt in axialer Richtung gesehen ein Vormontage-Lagerabschnitt 54. Der Vormontage-Lagerabschnitt 54 umfasst einen Führungsabschnitt 56 mit parallel zueinander ausgerichteten Seitenflächen 57 und einer Breite B1. Daran anschließend folgt der eigentliche zylindrische Lagerabschnitt 53 mit einem gegenüber dem ersten Durchmesser D1 größeren Durchmesser D2. Der zylindrische Lagerabschnitt 53 wird endseitig von einem plattenförmigen Endabschnitt 59 begrenzt. Der plattenförmige Endabschnitt 59 weist eine im Wesentlichen rechteckige Grundfläche mit Seitenkanten 59a und abgerundeter Ober- und Unterkante 59b auf. Die Seitenkanten 59a sind hinsichtlich einer Länge L1 länger ausgeführt als die Ober- und Unterkante 59b mit einer Länge L2.

Das zugehörige Gegenlagerelement 60 ist in Querrichtung des Kraftfahrzeugs gesehen in einem mittleren Bereich am Fahrzeugboden 6 verbunden, z.B. verschraubt oder verschweißt. Das Gegenlagerelement 60 kann auch ein integraler Bestandteil der Fahrzeugkarosserie sein. Das Gegenlagerelement 60 bildet einen Gehäuseabschnitt zur Lagerung und Aufnahme der Lagerachsen 51 von zwei benachbart angeordneten Lehnenelementen 1 und ist dementsprechend spiegelsymmetrisch um eine Mittelachse ausgeführt. Das Gegenlagerelement 60 umfasst im Wesentlichen einen Gehäuseabschnitt 61 mit einem umlaufenden Oberflächenabschnitt 62 und beidseits an den Gehäuseabschnitt 61 angrenzende senkrechten Wandabschnitte 63. Die Wandabschnitte 63 weisen im Wesentlichen eine Trapezform mit abgerundeten Seiten auf. Die gegenüberliegenden beabstandet zueinander angeordneten senkrechten Wandabschnitte 63 bildet jeweils eine nach innen weisende Anlagefläche 63a aus.

In jedem senkrechten Wandabschnitt 63 ist eine zylindrische Lagerausnehmung 64 mit einem Durchmesser D2 eingebracht, der dem Durchmesser D2 des Lagerabschnitts 53 entspricht und zur Aufnahme und Lagerung der Lagerachse 51 in der montierten Situation (Endmontage-Position) dient.

Ausgehend von dieser Lagerausnehmung 64 erstreckt sich ein nach oben verlaufender rechteckiger erster Schlitzbereich 65, der hinsichtlich der Breite B2 kleiner ausgeführt ist als der Durchmesser D2 des Lagerabschnitts 53, und hinsichtlich der Breite B2 etwas größer ausgebildet ist, als die Breite B1 des Führungsabschnitts 56. Der erste Schlitzbereich 65 weist gegenüberliegende Seitenflächen 65a auf. Der erste Schlitzbereich 65 geht in einen zweiten Schlitzbereich 66 über, der in den umlaufenden Oberflächenabschnitt des ringförmigen Gehäuseabschnitts 61 eingebracht ist. Der zweite Schlitzbereich hat die Breite B3. Die Breite B3 ist dabei größer ausgeführt als die Länge L2 der Ober- bzw. Unterkante 59b des Endabschnitts. Die Breite B3 ist weiterhin kleiner ausgeführt als die Länge L1 der Seitenkanten 59a des Endabschnitts 59.

Die zweiten Schlitzbereiche 66 ausgehend von den senkrechten Wandabschnitten rechts/links des Gehäuseabschnitts 61 bilden auf dem umlaufenden Oberflächenabschnitt eine durchgängige nach oben gerichtete Ausnehmung 67.

Aufgrund der obenstehend beschriebenen Ausgestaltung der äußern und mittleren Lagerstellen 20/40 ist eine werkzeuglose Montage und lage- und crashsicherer Einbau der Lehnenelemente 1 der Rückenlehne der Sitzanordnung wie nachfolgend beschrieben in mehreren Montageschritten möglich:
Die nachfolgende Beschreibung bezieht sich auf die Montage eines Lehnenelements 1, die Montage der weiteren oder eines weiteren Lehnenelements 1 erfolgt entsprechend.

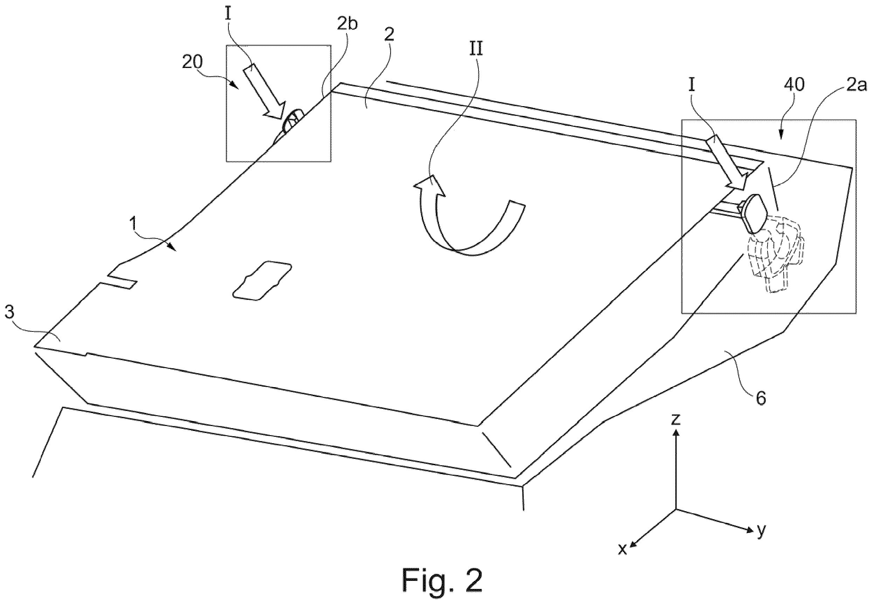

Das Lehnenelement 1 wird mit der die Rückenlehne bildenden Seite auf den Fahrzeugunterboden 6 in einer in der Figur 2 gezeigten Lehnenmontage-Position platziert. In dieser Lehnenmontage-Position ist die einteilige Sitzfläche der Sitzanordnung noch nicht im Kraftfahrzeug verbaut. Hierdurch ist es möglich das Lehnenelement 1 in Bezug auf die Schwenkachse 4 und relativ zu der Fahrzeugkarosserie weiter nach vorne geschwenkt zu platzieren. Das bedeutet, dass das Lehnenelement 1 mit seinem oberen Endbereich 3 in Hochrichtung gesehen tiefer ist als der untere Endbereich 2 des Lehnenelements 1.

Nur in dieser gezeigten Lehnenmontage-Position ist ein gleichzeitiges Einstecken der Lagerachse 21 bzw. der Lagerachse 51 in das zugeordnete Gegenlagerelement 30 bzw. 60 in einem ersten Montageschritt in eine sogenannte Vormontage-Position möglich. Das Einstecken der Lagerachsen 21 bzw. 51 des Lehnenelements 1 erfolgt dabei in Richtung des Pfeils I gemäß der Figuren 2 bzw. der Figuren 3 und 4 von oben. Diese Richtung ist eine erste Montagerichtung.

In diesem ersten Montageschritt müssen zwecks Erzielung der Vormontage-Position (Figur 3 und Figur 4 jeweils rechte Abbildung) die Lagerachsen 21 bzw. 51 in einer nachfolgend beschriebenen Position ausgerichtet sein. In dieser ersten Position sind die Seitenkanten 29a bzw. 59a der jeweiligen Endabschnitte parallel zur ersten Montagerichtung ausgerichtet, d.h. die Endabschnitte 29 und 59 weisen mit ihren schmalen Seitenkanten in Richtung des jeweils zugeordneten zweiten Schlitzbereichs. Des Weiteren ist die äußeren Lagerachse 21 derart ausgerichtet, dass der Ausrichtabschnitt 25 in Montagerichtung gesehen nach oben weisend ausgerichtet ist und der Führungsabschnitt 26 in Montagrichtung nach unten weisend ausgerichet ist. Die Lagerachsen werden im ersten Montageschritt mittels ihrer Endabschnitte 29 bzw. 59 in z-Richtung von oben nach unten in den zweiten Schlitzbereich 36 bzw. 66 eingesteckt derart, dass der Endbereich 29 in den zugeordneten zweiten Schlitzbereich 36 und der Vormontage-Lagerabschnitt 24 der Lagerachse 21 in den ersten Schlitzbereich 35 des Gegenlagerelements eingesteckt werden und entsprechend zur Ausbildung der mittleren Lagerstelle der Endbereich 59 in den zugeordneten zweiten Schlitzbereich 56 und der Vormontage-Lagerabschnitt 54 der Lagerachse 51 in den ersten Schlitzbereich 65 des Gegenlagerelements 60 eingesteckt werden. In der komplett derart eingesteckten in der Figur 3 und Figur 4 gezeigten Vormontage-Position kann die Lagerachse 21 über den nach oben ragenden Ausrichtabschnitt 25 an den Seitenflächen 35a des ersten Schlitzbereichs 35 sowie über ein Abstützen des Führungsabschnitts 26 über seinen nach unten weisenden Endbereich 26a an der Lagerausnehmung 34 vorjustiert in Lage gehalten werden. Des Weiteren kann sich die Lagerachse 21 in axialer Richtung gesehen über die Anlagefläche 29c an der Anlagefläche 33a des Gegenlagerelements 33 abstützen.

Im Bereich der mittleren Lagerstelle 40 kann sich die Lagerachse 51 seitlich über den Führungsabschnitt 56 an den Seitenflächen 65a des ersten Schlitzbereichs 65 sowie über seinen nach unten weisenden Endbereich 26a an der Lagerausnehmung 34 abstützen und kann somit vorjustiert in Lage gehalten werden.

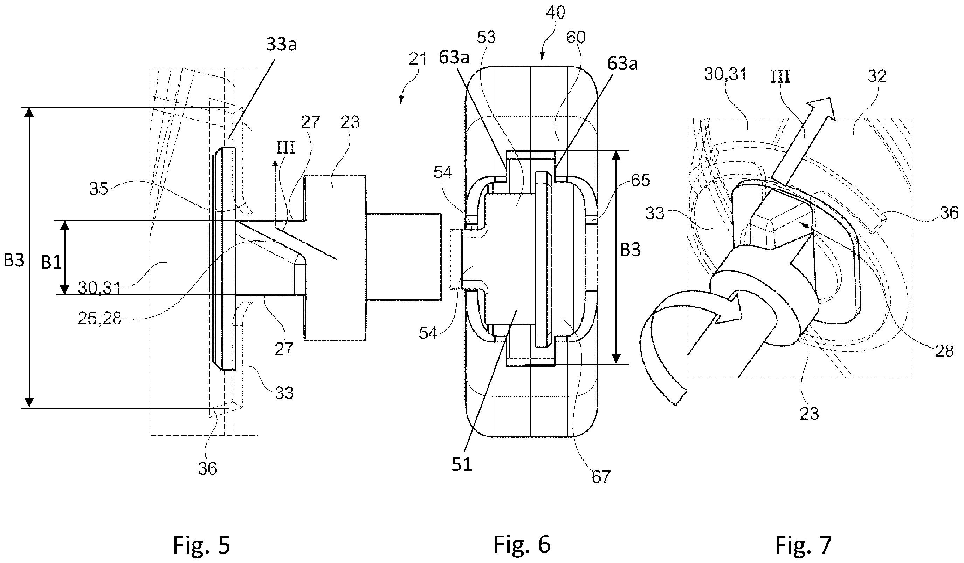

Die Figuren 5 und 6 zeigen die Situation nach dem ersten Montageschritt der äußeren und mittleren Lagerstelle 20 bzw. 40 im Detail in einer Draufsicht.

Nachfolgend zu dem ersten Montageschritt (Vormontage-Position) erfolgt wie es in der Figur 2 durch den Pfeil II angezeigt ist, ein zweiter Montageschritt, in dem das Lehnenelement 1 ausgehend von der Vormontage-Position der äußeren und mittleren Lagerstelle nach oben verlagert wird. Bei dieser Lehnenverlagerung wird das Lehnenelement 1 über die konisch verlaufende und exzentrisch angeordnete Gleitfläche 28 des Ausrichtabschnitts 25, zwangsgeführt in Axialrichtung (Querrichtung des Kraftfahrzeugs) verschoben. Bei dieser kombinierten Dreh- und Axialbewegung liegt die Gleitfläche 28 in Wirkverbindung gleitend an der zugeordneten Seitenfläche 35a des ersten Schlitzbereichs 35 an.

Die Axialverschiebung ist durch den Pfeil III angezeigt. Bei dieser kombinierten rotatorischen und translatorischen Bewegung verschiebt sich die Lagerachse 21 derart, dass der zylindrische Lagerabschnitt 23 in der zugeordneten Lagerausnehmung 34 in Wirkverbindung gelangt und dort gelagert ist. Gleichzeitig und gleichermaßen verlagert sich die Lagerachse 51 der mittleren Lagerstelle 40 derart, dass der Vormontage-Lagerabschnitt 54 aus dem ersten Schlitzbereich 65 herausgeführt und der zylindrische Lagerabschnitt 53 in der zugeordneten Lagerausnehmung 64 gehalten ist.

Die Lagerachse 21 sowie die Lagerachse 51 sind in der Endmontage-Position derart in dem zugeordneten Gegenlagerelement 30 bzw. 60 gelagert aufgenommen, dass ein unbeabsichtigtes Herausgleiten bzw. ein Herauslösen im Falle eines Crashs nicht möglich ist.

Nach dem zweiten Montageschritt sind die äußere Lagerstelle 20 und die mittlere Lagerstelle 40 in der montierten Situation. Eine Verschwenkbewegung des Lehnenelements 1 kann um die Schwenkachse 4 erfolgen.

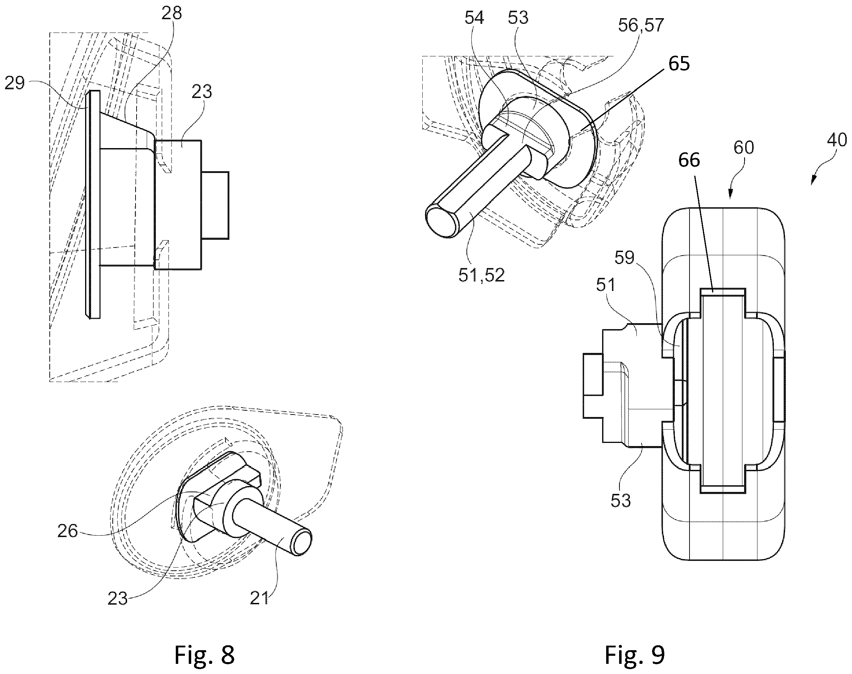

Die Figuren 8 und 9 zeigen die obenstehend beschriebene montierte Situation des Lehnenelements. Insbesondere aus der perspektivischen Ansicht ist zu erkennen, dass die Lagerachsen 21 und 51 verschwenkbar um die zylindrischen Lagerabschnitte 23 und 53 d.h. um die Schwenkachse 4 lage- und crashsicher gehalten sind. Die Lage- und Chrashsicherung wird insbesondere über die Endabschnitte 29 und 59 erreicht die in dem zugeordneten Gegenlagerelement 30 bzw. 60 verdreht in Bezug auf den zweiten Schlitzabschnitt gehalten sind.

Nach der obenstehend beschriebenen Montage der Lehnenelemente 1 wird in einem abschließenden Schritt zur Endmontage der Sitzanordnung die Sitzfläche montiert. Nach dem Einbau der Sitzfläche können die Lehnenelemente 1 nicht wieder in die in der Figur 2 gezeigte Lehnenmontageposition nach vorne verschwenkt werden, so dass ein unbeabsichtigtes Lösen/Herausnehmen der Lehnenelemente 1 unmöglich ist. Wie eingangs beschrieben kann nur in der Vormontage-Position das Lehnenelement 1 über die Lagerachsen 21 bzw. 51 aus dem zugeordneten Gegenlagerelement 30 bzw. 60 zerstörungsfrei herausgenommen werden.

### Bezugszeichenliste

- 1: Lehnenelement
- 2: unterer Endbereich
- 3: oberer Endbereich
- 4: Schwenkachse
- 6: Fahrzeugunterboden
- 2a: zugewandter mittlerer seitlicher Randbereich
- 2b: einander abgewandter äußerer Randbereich
- 20: äußere Lagerstelle
- 21: Lagerachse
- 22: erster zylindrischer Endabschnitt
- 23: zylindrischer Lagerabschnitt
- 24: Vormontage-Lagerabschnitt
- 25: Ausrichtabschnitt
- 26: Führungsabschnitt
- 27: Seitenflächen
- 28: Gleitfläche
- 29: Endabschnitt
- 29a: Seiternkanten
- 29b: Ober- und Unterkante
- 30: Gegenlagerelement
- 31: ringförmiger Gehäuseabschnitt
- 32: Oberflächenabschnitt
- 33: senkrechter Wandabschnitt
- 34: Lagerausnehmung
- 35: erster Schlitzbereich
- 36: zweiter Schlitzbereich
- 40: mittlere Lagerstelle
- 51: Lagerachse
- 52: erster zylindrischer Endabschnitt
- 53: zylindrischer Lagerabschnitt
- 54: Vormontage-Lagerabschnitt
- 56: Führungsabschnitt
- 57: Seitenflächen
- 59: Endabschnitt
- 59a: Seiternkanten
- 59b: Ober- und Unterkante
- 60: Gegenlagerelement
- 61: ringförmiger Gehäuseabschnitt
- 62: Oberflächenabschnitt
- 63: senkrechter Wandabschnitt
- 64: Lagerausnehmung
- 65: erster Schlitzbereich
- 66: zweiter Schlitzbereich
- 67: Ausnehmung

## Patentansprüche

1. Befestigungsvorrichtung für ein Lehnenelement (1) einer Rückenlehne einer Sitzanordnung in einem Kraftfahrzeug, wobei die Rückenlehne zwei unabhängig voneinander um eine quer zur Fahrtrichtung verlaufende Schwenkachse (4) verlagerbar angeordnete Lehnenelemente (1) umfasst,
wobei jedes Lehnenelement (1) zur Bildung der Schwenkachse (4) eine äußere Lagerstelle (20) und eine mittlere Lagestelle (40) umfasst,
wobei die äußere Lagerstelle (20) eine an dem Lehnenelement (1) festgelegte Lagerachse (21) und ein an der Karosserie des Kraftfahrzeugs festgelegtes Gegenlagerelement (30) umfasst,
wobei die Lagerachse (21) in einer Vormontage-Position und in einer Endmontage-Position in dem Gegenlagerelement (30) gelagert werden kann,
wobei die Lagerachse (21) einen Endabschnitt (22) zur Anbindung an das Lehnenelement (1), einen zylindrischen Lagerabschnitt (23) zur Lagerung in der Endmontage-Position, einen Vormontage-Lagerabschnitt (24) und einen den Vormontage-Lagerabschnitt (24) axial endseitig begrenzenden plattenförmigen Endabschnitt (29) umfasst, wobei der Vormontage-Lagerabschnitt (24) einen rechteckigen Führungsabschnitt (26) mit parallel zueinander ausgerichteten Seitenflächen (27) zur Lagerung in der Vormontage-Position und einer exzentrisch angeformten Ausrichtabschnitt (25) aufweist, wobei der Ausrichtabschnitt (25) zur axialen Verlagerung der Lagerachse (21) ausgehend von der Vormontage-Position in die Endmontage-Position konisch ausgeführt ist und eine schräg verlaufende sich zum Lagerabschnitt (23) hin verjüngende Gleitfläche (28) und eine der Gleitfläche (28) gegenüberliegende Gegenlagerfläche (28a) umfasst,
wobei das Gegenlagerelement (30) einen Gehäuseabschnitt (31) mit einer zum Lagerabschnitt (23) korrespondierenden zylindrischen Lagerausnehmung (34) und einen rechteckigen ersten Schlitzbereich (35) zur Aufnahme des Führungsabschnitts (26) in der Vormontage-Position umfasst,
wobei der Schlitzbereich (35) gegenüberliegende Seitenflächen (35a) aufweist, die zur gleitenden Anlage des Ausrichtabschnitts (25) bei der Verlagerung ausgehend von der Vormontage-Position in die Endmontage-Position ausgeführt sind,
wobei die mittlere Lagerstelle (40) eine an dem Lehnenelement (1) festgelegte Lagerachse (51) und ein an der Karosserie des Kraftfahrzeugs festgelegtes Gegenlagerelement (60) umfasst,
wobei die Lagerachse (51) in einer Vormontage-Position und in einer Endmontage-Position in dem Gegenlagerlement (60) gelagert werden kann und hierfür einen Endabschnitt zur Anbindung an das Lehnenelement (1), einen Vormontage-Lagerabschnitt (54) mit einem rechteckigen Führungsabschnitt (56) zur Lagerung in der Vormontage-Position und einen zylindrischen Lagerabschnitt (53) zur Lagerung in der Endmontage-Position, umfasst,
wobei das Gegenlagerlement (60) in einem mittleren Bereich in einer Querrichtung angeordnet ist und einen Gehäuseabschnitt zur Lagerung und Aufnahme von zwei benachbart angeordneten Lagerachsen (51) umfasst, und hierfür zwei Wandabschnitte (63) mit jeweils einer den zylindrischen Lagerabschnitten (53) zugeordneten zylindrischen Lagerausnehmung (64), sowie jeweils einem rechteckigen ersten Schlitzbereich (65) zur Aufnahme des jeweiligen Führungsabschnitts (56) in der Vormontage-Position umfasst.

2. Befestigungsvorrichtung für ein Lehnenelement (1) einer Rückenlehne einer Sitzanordnung in einem Kraftfahrzeug nach Anspruch 1, **dadurch gekennzeichnet, dass** der Führungsabschnitt (26) einen ersten radialen Endabschnitt (26a) aufweist und gegenüberliegend zu dem ersten radialen Endabschnitt (26a) der Vormontage-Lagerabschnitt (24) mit dem exzentrisch angeformten Ausrichtabschnitt (25) ausgeführt ist.

3. Befestigungsvorrichtung für ein Lehnenelement (1) einer Rückenlehne einer Sitzanordnung in einem Kraftfahrzeug nach Anspruch 1 oder 2, **dadurch gekennzeichnet, dass** der plattenförmige Endabschnitt (29) eine im Wesentlichen rechteckige Grundfläche mit Seitenkanten (29a) und Ober- und Unterkante (29b) sowie eine ebene Anlagefläche (29c) aufweist, wobei die Seitenkanten (29a) hinsichtlich einer Länge (L1) länger ausgeführt sind als die Ober- und Unterkante (29b) mit einer Länge (L2).

4. Befestigungsvorrichtung für ein Lehnenelement (1) einer Rückenlehne einer Sitzanordnung in einem Kraftfahrzeug nach einem der vorangehenden Ansprüche, **dadurch gekennzeichnet, dass** das Gegenlagerelement (30) einen an den Gehäuseabschnitt (31) angrenzenden senkrechten Wandabschnitt (33) umfasst, der eine nach innen weisende Anlagefläche (33a) bildet, wobei der plattenförmige Endabschnitt (29) mit seiner Anlagefläche (29c) in der Vormontage-Position an der Anlagefläche (33a) anliegend abgestützt und axial gesichert ist.

5. Befestigungsvorrichtung für ein Lehnenelement (1) einer Rückenlehne einer Sitzanordnung in einem Kraftfahrzeug nach Anspruch 3 oder den Ansprüchen 3 und 4, wobei das Gegenlagerelement (30) einen zweiten Schlitzbereich (36) umfasst, der ausgehend von dem ersten Schlitzbereich (35) in einen ringförmigen Gehäuseabschnitt (31) eingebracht ist, wobei der zweite Schlitzbereich (36) eine Breite (B3) aufweist, wobei die Breite (B3) größer ausgeführt ist als die Länge (L2) der Ober- bzw. Unterkante (29b) des Endabschnitts (29) und wobei die Breite (B3) kleiner ausgeführt als die Länge (L1) der Seitenkanten (29a) des Endabschnitts (29).

6. Verfahren zur Montage eines Lehnenelements (1) mittels der Befestigungsvorrichtung nach einem der vorangehenden Ansprüche mit den folgenden Montageschritten:
- Ausrichten des Lehnenelements (1) in eine Lehnenmontageposition auf dem Fahrzeugunterboden (6) des Kraftfahrzeugs derart, dass das Lehnenelement (1) mit seinem oberen Endbereich (3) in Hochrichtung gesehen tiefer ausgerichtet ist als der untere Endbereich (2) des Lehnenelements (1)
- Einstecken der Lagerachse (21) und (51) in das zugeordnete Gegenlagerelement in die Vormontage-Position derart, dass die Lagerachsen (21) und (51) mittels ihrer Führungsabschnitte (26, 56) in den zugeordneten ersten Schlitzbereichen (35, 65) eingesteckt und abgestützt in Lage gehalten werden,
- Verlagerung des Lehnenelements (1) durch eine Drehbewegung nach oben derart, dass der obere Endbereich (2) nach oben verschwenkt und das Lehnenelement (1) über ein Zusammenwirken des Ausrichtabschnitts (25) mit dem rechteckigen ersten Schlitzbereich (35) in einer Axialrichtung in die End-Montageposition verschoben wird, in der der zylindrische Lagerabschnitt (23) in der zugeordneten Lagerausnehmung (34) und gleichermaßen der zylindrische Lagerabschnitt (53) in der zugeordneten Lagerausnehmung (64) gehalten ist.

## Claims

1. Fastening device for a backrest element (1) of a backrest of a seat arrangement in a motor vehicle, wherein the backrest comprises two backrest elements (1) arranged movably independently of each other about a pivot axis (4) running transversely with respect to the direction of travel,
wherein each backrest element (1) comprises an outer bearing point (70) and a central bearing point (40) for forming the pivot axis (4),
wherein the outer bearing point (20) comprises a bearing axle (21) secured on the backrest element (1) and a counter bearing element (30) secured on the body of the motor vehicle,
wherein the bearing axle (21) can be mounted in the counter bearing element (30) in a preassembly position and in a final assembly position,
wherein the bearing axle (21) comprises an end portion (22) for attaching to the backrest element (1), a cylindrical bearing portion (23) for mounting in the final assembly position, a preassembly bearing portion (24) and a plate-like end portion (29) bounding the preassembly bearing portion (24) axially on the end side, wherein the preassembly bearing portion (24) has a rectangular guide portion (26) with side surfaces (27), which are aligned parallel to each other, for mounting in the preassembly position, and an eccentrically integrally formed alignment portion (25), wherein the alignment portion (25) is formed conically for the axial movement of the bearing axle (21) from the preassembly position into the final assembly position and comprises an obliquely running sliding surface (28) tapering towards the bearing portion (23) and a counter bearing surface (28a) lying opposite the sliding surface (28),
wherein the counter bearing element (30) has a housing portion (31) with a cylindrical bearing recess (34) corresponding to the bearing portion (23) and a rectangular first slot region (35) for receiving the guide portion (26) in the preassembly position,
wherein the slot region (35) has side surfaces (35a) which are designed for the sliding contact of the alignment portion (25) during the movement from the preassembly position into the final assembly position,
wherein the central bearing point (40) comprises a bearing axle (51) secured on the backrest element (1) and a counter bearing element (60) secured on the body of the motor vehicle,
wherein the bearing axle (51) can be mounted in the counter bearing element (60) in a preassembly position and in a final assembly position and, for this purpose, comprises an end portion for attaching to the respective backrest element (1), a preassembly bearing portion (54) with a rectangular guide portion (56) for mounting in the preassembly position, and a cylindrical bearing portion (53) for mounting in the final assembly position,
wherein the counter bearing element (60) is arranged in a central region in a transverse direction and comprises a housing portion for the mounting and receiving of two adjacently arranged bearing axles (51) and, for this purpose, comprises two wall portions (63) in each case having a cylindrical bearing recess (64) assigned to the cylindrical bearing portions (53) and in each case having a rectangular first slot region (65) for receiving the respective guide portion (56) in the preassembly position.

2. Fastening device for a backrest element (1) of a backrest of a seat arrangement in a motor vehicle according to Claim 1, **characterized in that** the guide portion (26) has a first radial end portion (26a), and the preassembly bearing portion (24) with the eccentrically integrally formed alignment portion (25) is formed lying opposite the first radial end portion (26a).

3. Fastening device for a backrest element (1) of a backrest of a seat arrangement in a motor vehicle according to Claim 1 or 2, **characterized in that** the plate-like end portion (29) has a substantially rectangular base area with side edges (29a) and an upper and lower edge (29b) and a flat contact surface (29c), wherein the side edges (29a) are longer in respect of a length (L1) than the upper and lower edge (29b) with a length (L2).

4. Fastening device for a backrest element (1) of a backrest of a seat arrangement in a motor vehicle according to one of the preceding claims, **characterized in that** the counter bearing element (30) comprises a perpendicular wall portion (33) which is adjacent to the housing portion (31) and forms an inwardly facing contact surface (33a), wherein the plate-like end portion (29) is supported and axially secured with its contact surface (29c) on the contact surface (33a) in the preassembly position.

5. Fastening device for a backrest element (1) of a backrest of a seat arrangement in a motor vehicle according to Claim 3 or Claims 3 and 4, wherein the counter bearing element (30) comprises a second slot region (36) which is introduced from the first slot region (35) into an annular housing portion (31), wherein the second slot region (36) has a width (B3), wherein the width (B3) is larger than the length (L2) of the upper or lower edge (29b) of the end portion (29), and wherein the width (B3) is smaller than the length (L1) of the side edges (29a) of the end portion (29).

6. Method for mounting a backrest element (1) by means of the fastening device according to one of the preceding claims, comprising the following mounting steps:
- aligning the backrest element (1) in a backrest assembly position on the vehicle underbody (6) of the motor vehicle in such a manner that the backrest element (1) is aligned with its upper end region (3), as seen in the vertical direction, lower than the lower end region (2) of the backrest (1),
- inserting the bearing axle (21) and (51) into the assigned counter bearing element in the preassembly position in such a manner that the bearing axles (21) and (51) are inserted by means of the guide portions (26, 56) in the assigned first slot regions (35, 65) and held supported in position,
- moving the backrest element (1) upwards by means of a rotational movement in such a manner that the upper end region (2) pivots upwards and the backrest element (1) is displaced by interaction with the alignment portion (25) with the rectangular first slot region (35) in an axial direction into the final assembly position in which the cylindrical bearing portion (23) is held in the assigned bearing recess (34) and likewise the cylindrical bearing portion (53) is held in the assigned bearing recess (64).

## Revendications

1. Dispositif de fixation pour un élément de dossier (1) d'un dossier d'un agencement de siège dans un véhicule automobile, le dossier comprenant deux éléments de dossier (1) disposés indépendamment l'un de l'autre de manière à pouvoir être déplacés autour d'un axe de pivotement (4) s'étendant transversalement à la direction de déplacement,
chaque élément de dossier (1) comprenant, pour former l'axe de pivotement (4), un point de positionnement extérieur (20) et un point de positionnement central (40),
le point de positionnement extérieur (20) comprenant un axe de positionnement (21) fixé sur l'élément de dossier (1) et un élément de positionnement associé (30) fixé sur la carrosserie du véhicule automobile,
l'axe de positionnement (21) étant apte à être maintenu dans une position de prémontage et dans une position de montage final dans l'élément de positionnement associé (30),
l'axe de positionnement (21) comprenant une partie d'extrémité (22) pour la liaison à l'élément de dossier (1), une partie cylindrique de positionnement (23) pour le positionnement dans la position de montage final, une partie de positionnement de prémontage (24) et une partie d'extrémité (29) en forme de plaque délimitant axialement la partie de positionnement de prémontage (24) du côté de l'extrémité, la partie de positionnement de prémontage (24) comprenant une partie de guidage rectangulaire (26) avec des surfaces latérales (27) orientées parallèlement entre elles pour le positionnement dans la position de prémontage et une partie d'alignement (25) formée de manière excentrique, la partie d'alignement (25) étant réalisée de manière effilée pour le déplacement axial de l'axe de positionnement (21) à partir de la position de prémontage dans la position de montage final et comprenant une surface de glissement (28) s'étendant en biais et se rétrécissant en direction de la partie de positionnement (23) et une surface de positionnement (28a) associée opposée à la surface de glissement (28),
l'élément de positionnement associé (30) comprenant une partie de logement (31) avec un évidement de palier cylindrique (34) correspondant à la partie de positionnement (23), et une première zone de fente rectangulaire (35) pour recevoir la partie de guidage (26) dans la position de prémontage,
la zone de fente (35) présentant des surfaces latérales opposées (35a) qui sont conçues pour l'appui glissant de la partie d'alignement (25) lors du déplacement à partir de la position de prémontage vers la position de montage final,
le point de positionnement central (40) comprenant un axe de positionnement (51) fixé à l'élément de dossier (1) et un élément de positionnement associé (60) fixé à la carrosserie du véhicule automobile,
l'axe de positionnement (51) étant apte à être maintenu dans une position de prémontage et dans une position de montage final dans l'élément de positionnement associé (60) et
comprenant à cet effet une partie d'extrémité pour la liaison à l'élément de dossier (1), une partie de positionnement de prémontage (54) avec une partie de guidage rectangulaire (56) pour le maintien dans la position de prémontage et une partie cylindrique de palier (53) pour le positionnement dans la position de montage final,
l'élément de positionnement associé (60) étant disposé dans une zone centrale dans une direction transversale et comprenant une partie de logement pour le maintien et la réception de deux axes de positionnement (51) disposés de manière adjacente, et comprenant à cet effet deux parties de paroi (63) avec chacune un évidement de palier cylindrique (64) associé aux parties de palier cylindriques (53), ainsi que, chacune, une première zone de fente rectangulaire (65) pour la réception de la partie de guidage respective (56) dans la position de prémontage.

2. Dispositif de fixation pour un élément de dossier (1) d'un dossier d'un agencement de siège dans un véhicule automobile selon la revendication 1, **caractérisé en ce que** la partie de guidage (26) présente une première partie d'extrémité radiale (26a) et, en face de la première partie d'extrémité radiale (26a), la partie de positionnement de prémontage (24) est réalisée avec la partie d'alignement (25) formée de manière excentrée.

3. Dispositif de fixation pour un élément de dossier (1) d'un dossier d'un agencement de siège dans un véhicule automobile selon la revendication 1 ou la revendication 2, **caractérisé en ce que** la partie d'extrémité en forme de plaque (29) présente une surface de base sensiblement rectangulaire avec des bords latéraux (29a), et des bords supérieur et inférieur (29b) ainsi qu'une surface d'appui plane (29c), les bords latéraux (29a) étant réalisés de façon à être plus longs en ce qui concerne une longueur (L1) que les bords supérieur et inférieur (29b) avec une longueur (L2).

4. Dispositif de fixation pour un élément de dossier (1) d'un dossier d'un agencement de siège dans un véhicule automobile selon l'une des revendications précédentes, **caractérisé en ce que** l'élément de positionnement associé (30) comprend une partie de paroi verticale (33) adjacente à la partie de logement (31), qui forme une surface d'appui (33a) dirigée vers l'intérieur, la partie d'extrémité en forme de plaque (29) étant soutenue et bloquée axialement avec sa surface d'appui (29c) contre la surface d'appui (33a) dans la position de prémontage.

5. Dispositif de fixation pour un élément de dossier (1) d'un dossier d'un agencement de siège dans un véhicule automobile selon la revendication 3 ou les revendications 3 et 4, dans lequel l'élément de positionnement associé (30) comprend une deuxième zone de fente (36) qui est introduite dans une partie de logement annulaire (31) à partir de la première zone de fente (35), la deuxième zone de fente (36) présentant une largeur (B3), la largeur (B3) étant plus grande que la longueur (L2) du bord supérieur ou inférieur (29b) de la partie d'extrémité (29) et la largeur (B3) étant plus petite que la longueur (L1) des bords latéraux (29a) de la partie d'extrémité (29).

6. Procédé de montage d'un élément de dossier (1) au moyen du dispositif de fixation selon l'une des revendications précédentes, comprenant les étapes de montage suivantes :
- orientation de l'élément de dossier (1) dans une position de montage de dossier sur le soubassement (6) du véhicule automobile de telle sorte que l'élément de dossier (1) soit orienté avec sa zone d'extrémité supérieure (3) plus bas que la zone d'extrémité inférieure (2) de l'élément de dossier (1), vu dans la direction verticale,
- insertion des axes de positionnement (21) et (51) dans l'élément de positionnement associé dans la position de prémontage de telle sorte que les axes de positionnement (21) et (51) soient insérés et maintenus en position en étant soutenus au moyen de leurs parties de guidage (26, 56) dans les premières zones de fente (35, 65) associées,
- déplacement de l'élément de dossier (1) par un mouvement de rotation vers le haut de telle sorte que la zone d'extrémité supérieure (2) pivote vers le haut et que l'élément de dossier (1) soit déplacé, par une coopération de la partie d'alignement (25) avec la première zone de fente rectangulaire (35) dans une direction axiale, dans la position de montage finale, dans laquelle la partie cylindrique de positionnement (23) est maintenue dans l'évidement de palier associé (34) et de même la partie cylindrique de palier (53) est maintenue dans l'évidement de palier associé (64).
